Europäisches Patentamt

European Patent Office

Office européen des brevets

(11) Veröffentlichungsnummer: **0 187 193**
**A2**

## (12) EUROPÄISCHE PATENTANMELDUNG

(21) Anmeldenummer: 85109861.6

(22) Anmeldetag: 06.08.85

(51) Int. Cl.⁴: **A 43 B 13/38**

(30) Priorität: 24.12.84 DE 3447360

(43) Veröffentlichungstag der Anmeldung:
16.07.86 Patentblatt 86/29

(84) Benannte Vertragsstaaten:
AT BE CH DE FR GB IT LI LU NL SE

(71) Anmelder: **Heinrichs, Karl-Heinz**
**Schützenstrasse 4 Ophoven**
**D-5143 Wassenberg(DE)**

(72) Erfinder: **Heinrichs, Karl-Heinz**
**Schützenstrasse 4 Ophoven**
**D-5143 Wassenberg(DE)**

(74) Vertreter: **Liermann, Manfred**
**Josef-Schregel-Strasse 19**
**D-5160 Düren(DE)**

(54) **Tiefziehfussbett.**

(57) Bei einem Verfahren zur Herstellung eines Tiefziehfuß-bettes als Halbzeug für ein Schuhwerk wird eine mit Füllstoffen und Verstärungseinlage und ggf. mit einem Treibmittel versehene vulkanisierbare Gummimischung verwendet. Zur Erhöhung der Verschleißfestigkeit und Lebensdauer des Tiefziehfußbettes 1 wird der vordere Bereich 7 mit einem Streifen 8 belegt, der ebenfalls aus einer unvulkanisierten Gummimischung von im wesentlichen der gleichen Zusammensetzung wie die Gummimatrix besteht, woraus das Tiefziehfußbett 1 gebildet ist. Bei der Hestellung des Tiefziehfußbettes werden die Gummimatrix und der Randstreifen unter inniger Berührung miteinander gemeinsam ausvulkanisiert. Auch andere Teile des Randes 6 des Teifziehfußbettes können mit Verstärkungsstreifen 8 versehen sein. Die Stirnseiten 9 der Verstärkungsstreifen 8 sind nach innen umgebogen. Schließlich wird Schutz für ein nach dem vorgenannten Verfahren hergestelltes Tiefziehfußbett beansprucht.

Fig. 1

"Tiefziehfußbett"

Die vorliegende Erfindung betrifft ein Verfahren zur Herstellung eines eine für die Berührung mit der Fußsohle vorgesehene Auflage aus Leder aufweisenden Tiefziehfußbettes aus einer mit Füllstoffen und/oder Verstärkungseinlagen versehenen, vulkanisierbaren Gummimischung durch Ausvulkanisation der Gummimischung in einer Vulkanisationsform.

Tiefziehfußbetten der genannten Art dienen beispielsweise als Halbzeug für die Herstellung von Sandalen. Bekannte Tiefziehfußbetten bestehen aus einer Mischung aus vulkanisierbarem Gummi, worin Füllstoffe, beispielsweise Kork, eingebettet und mit einvulkanisiert ist und die ggf. weitere Verstärkungseinlagen, z.B. lose gewebte Textilien und dgl., aufweisen. Die für die Berührung mit der Fußsohle vorgesehene Oberseite des Tiefziehfußbettes ist üblicherweise mit einer Auflage aus lohgegerbtem oder chromgegerbtem Leder versehen. Auf der der Lauffläche zugewandten Unterseite kann später eine Sohle des Schuhwerks durch Kleben oder dgl. befestigt werden.

Für die Herstellung des bekannten Tiefziehfußbettes haben sich hauptsächlich zwei Verfahren herausgebildet. Im ersten Fall wird eine flüssige Mischung aus vulkanisierbarem Gummi, der mit Füllstoffen wie z. B. Korkstückchen versehen ist, in eine Vulkanisationsform hineingegossen, in die gleichzeitig z.B. ein eine Verstärkungseinlage des Tiefziehfußbettes bildendes Gewebe eingebracht wurde. Die für die Berührung mit der Fußsohle vorgesehene Auflage des Tiefziehfußbettes aus Leder wird üblicherweise zum Schluß in die Form eingelegt und zusammen mit der flüssigen Gummimischung vulkanisiert. Da die flüssige Gummimischung aber einen verhältnismäßig hohen Anteil an Wasser aufweist, welches bei den üblichen Vulkanisationseinrichtungen verdampft, können nach diesem Verfahren nur Tiefziehfußbetten hergestellt werden, die eine Auflage aus Chromleder aufweisen. Chromleder zeichnet sich durch eine größere Wärmebeständigkeit aus als lohgegerbtes Leder.

Daneben gibt es auch ein Herstellungsverfahren für Tiefziehfußbetten, welches auch die Verwendung von lohgegerbtem Leder zuläßt. In diesem Falle wird ein vorgetrockneter Rohling einer vulkanisierbaren Gummimischung, der sich durch einen wesentlich geringeren Wassergehalt auszeichnet, in die Vulkanisationsform eingebracht, mit der für die Fußsohle vorgesehenen Auflage aus lohgegerbtem Leder bedeckt und vulkanisiert. Der vorgetrocknete Rohling weist ebenfalls Füllstoffe aus Kork und bei Bedarf weitere Verstärkungseinlagen aus. Er ist aber auch mit einem Treibmittel versehen, welches während des Vulkanisationsvorganges dafür sorgt, daß die Gummimischung alle Bereiche der Vulkanisationsform mit der erforderlichen Dichte gleichmäßig ausfüllt.

Als eine besonders empfindliche Zone der bekannten Tiefziehfußbetten gilt der vordere Rand entsprechend dem Bereich der Zehen. Hier treten bei den bekannten Tiefziehfußbetten zuerst Verschleißerscheinungen auf. Zur Abhilfe wurde deshalb vorgesehen, die Bereiche des vorderen Randes der bekannten Tiefziehfußbetten z.B.

durch eine überstehende Sohle zu schützen. Dieser Sohlenrand ist jedoch bald zerstört, reißt die Sohle los und wirkt unschön.

Der Erfindung liegt somit die Aufgabe zugrunde, daß Tiefziehfußbett selbst am genannten Bereich genügend verschleißfest auszubilden.

Diese Aufgabe wurde entsprechend der vorliegenden Erfindung dadurch gelöst, daß man einen wenigstens von Füllstoffen und Einlagen freien Streifen der vulkanisierbaren Gummimischung auf mindestens einem Bereich der seitlichen Ränder der Vulkanisationsform zunächst getrennt von der übrigen Gummimischung in die Form einbringt und unter inniger Berührung mindestens mit der übrigen Gummimischung gemeinsam ausvulkanisiert. Die erfindungsgemäße Verfahrensweise zeichnet sich durch ihre besondere Einfachheit und Preisgünstigkeit vorteilhaft aus. Es wird aus der Gummimischung, woraus der Körper des Tiefziehfußbettes besteht, ein Streifen gebildet, wobei die den Streifen bildende Mischung frei ist von Füllstoffen und Verstärungseinlagen. Gfl. kann die Mischung des Streifens ein Treibmittel in geringer Menge aufweisen. Dieser Streifen wird so in die Vulkanisationsform eingelegt, daß er den vorderen Randbereich des Tiefziehfußbettes bedeckt. Außerdem wird die mit Füllstoffen verschnittene Gummimischung des Tiefziehfußbettes nach einem der beiden zuvor geschilderten Verfahren in die Vulkanisationsform eingebracht, mit der Auflage aus entsprechendem Leder versehen und gemeinsam ausvulkanisiert. Nach Aushärtung der Gummimischungen während der Vulkanisation ist der den vorderen Rand bildende Streifen, die für die Berührung mit der Fußsohle vorgesehene Auflage aus Leder und die
mit den Füllstoffen und Verstärkungseinlagen versehene
Gummimischung fest, dauerhaft und innig miteinander
verbunden. Es bleibt dabei der vorher an den Rändern
eingelegte Gummistreifen in seiner ursprünglichen
Gestalt weitgehend erhalten und wird von den Füllstoffen der übrigen Gummimischung nicht durchdrungen.
Er bildet einen glatten äußeren Abschluß, der dicht
und zusammenhängend ist und in die übrige Gummimischung des Tiefziehfußbettes fest und homogen
eingebunden ist. Auch die stirnseitigen Ränder des
Gummistreifens werden von der übrigen Gummimischung
dicht und innig umschlossen und gehen übergangslos in
diese über. Auf diese Weise werden Fehlstellen in dem
Gefüge vermieden, wodurch der Gummistreifen dauerhaft
in die das Tiefziehfußbett bildende Gummimischung
eingebettet ist und bleibt. Neben der Verstärkung des
vorderen Randes des Tiefziehfußbettes ist vorgesehen,
auch den Fersenrand oder andere besondere besonders
dem Verschleiß ausgesetzte Bereiche der Ränder des
Tiefziehfußbettes mit verschleißfesten Streifen zu
verstärken. Neben den Randbereichen kann es auch erforderlich sein, Bereiche der unteren Oberfläche des
Tiefziehfußbettes mit flächenhaften Einlagen aus
unvulkanisierbarer Gummimischung zu versehen. Daraus
können sich für die spätere Verbindung des Tiefziehfußbettes mit einer die Lauffläche bildenden Sohle
bevorzugte Bereiche für die Befestigung der Sohle an
dem Tiefziehfußbett ergeben.

Als besonders wirksam hat sich eine Maßnahme erwiesen,
wonach man die Stirnseiten der randseitigen Streifen
auf den inneren Bereich des Körpers' des Tiefziehfußbettes ausrichtet. Durch diese Maßnahme wird eine

- 6 -

besonders sichere Befestigung des Streifens am Rand gewährleistet und es werden Fehlstellen im Übergangs- bereich zwischen dem Streifen und der übrigen Mischung des Tiefziehfußbettes vermieden, die bei späterem Gebrauch des Schuhwerks möglicherweise den Ausgangspunkt für Ablösungserscheinungen bilden könnten.

Eine Ausgestaltung der Erfindung ist darin zu sehen, daß ein vorgetrockneter und nur noch geringe Restfeuchte sowie Füllstoffe und/oder Verstärkungseinlagen und Treibmittel enthaltender und geeignet zugeschnittener und vulkanisierbarer Sohlenrohling in eine Vulkanisationsform eingebracht und in einem verschleißfest zu gestaltenden Randbereich von einem Streifen einer vergleichbaren und ebenfalls vulkanisierbaren Gummimischung, die jedoch keine Füllstoffe und Verstärkungseinlagen enthält und mindestens treibmittelarm ist, umkleidet wird, worauf beide Teil mit der Lederauflage abgedeckt und unter inniger Berührung ausvulkanisiert werden.
Die Verwendung vorgetrockneter Gummimischungen vereinfacht den gesamten Herstellungsprozeß und erleichtert insbesondere die Einbringung des Streifens.

Schließlich wird ein Tiefziehfußbett als Halbzeug für ein Schuhwerk vorgeschlagen, welches nach einem der vorgenannten Verfahren hergestellt ist und einen im wesentlichen von Einlagen freien Streifen der selben Gummimischung aufweist, wie die übrigen Bereiche des Tiefziehfußbettes. Der erfindungsgemäße Streifen ist bevorzugt entlang des vorderen, dem Bereich der Zehen entsprechenden Teil des Randes angeordnet. Ein erfindungsgemäß hergestelltes Tiefziehfußbett zeichnet sich durch eine lange Lebensdauer und hohe Verschleiß-

festigkeit im vorderen Randbereich aus. Das erfindungsgemäße Tiefziehfußbett weist eine außerordentlich hohe Lebensdauer auf, denn der geschützte Randbereich hat sich als dauerhaft und wiederstandsfähig erwiesen. Die erreichbare Lebensdauer liegt beträchlich höher als die Lebensdauer bekannter vergleichbarer Tiefziehfußbetten. Das erfindungsgemäße Tiefziehfußbett kann besonders preisgünstig hergestellt werden.

Nachfolgend wird die Erfindung anhand eines ausgeführten Beispiels beschrieben.

Es zeigen:

Figur 1:  Ein Tiefziehfußbett in der Ansicht von der Unterseite

Figur 2:  Einen Längsschnitt durch das Tiefziehfußbett der Fig. 1 entlang der Linie II - II.

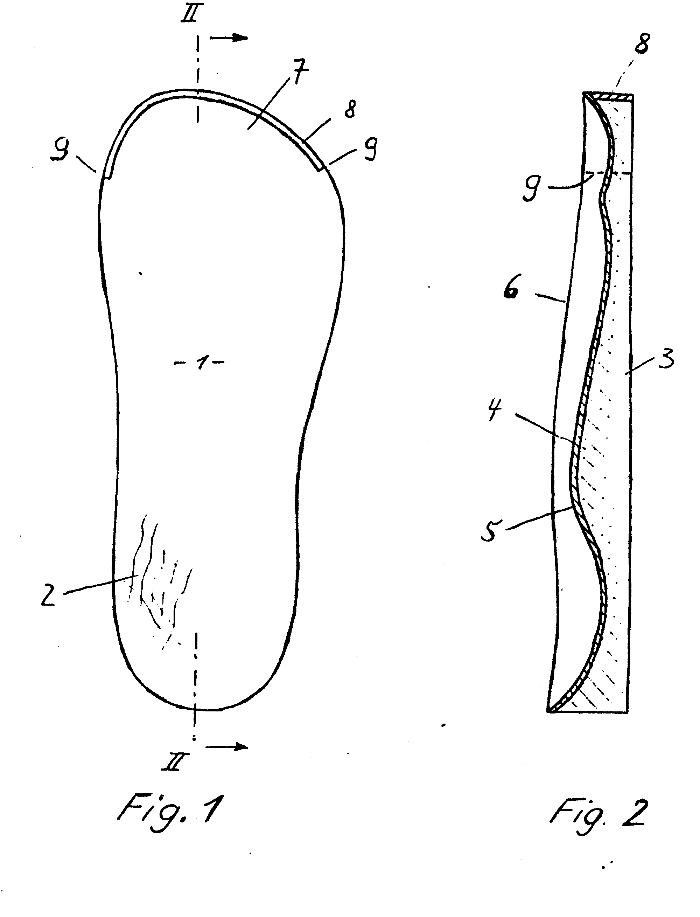

Das Tiefziehfußbett 1 besteht aus einer vulkanisierbaren Gummimischung, die mit Füllstoffen verschnitten ist. Die Füllstoffe bestehen beispielsweise aus Korkstückchen. Außer Korkstückchen können auch andere Füllstoffe, beispielsweise Holzspäne oder kurze Textilfasern in die Gummimischung eingebettet sein. Neben den Füllstoffen weist die Gummimischung Verstärkungseinlagen 2, die als loses Gewebe in die Gummimischung eingebettet sind, auf. Die Verstärkungseinlage 2 überzieht die gesamte untere Seite 3 des Tiefziehfußbettes 1; in der Fig. 1 ist davon nur ein kleiner Teilbereich angedeutet.

Die der Fußsohle zugekehrte Seite 4 des Tiefziehfußbettes 1 wird von einer Auflage 5 aus loh- oder chromgegerbtem Leder bedeckt. Das Tiefziehfußbett wird ringsum von einem hochgezogenen Rand 6 umschlossen, in den die Lederauflage 5 integriert ist. Der Zehenbereich 7 des Tiefziehfußbettes 1 ist mit einem stirnseitigen umlaufenden Streifen 8 versehen. Dieser Streifen 8 erstreckt sich von unterhalb der Lederauflage 5 durchgehend von der Oberseite 4 bis zur Unterseite 3 des Tiefziehfußbettes. Der Streifen 8 besteht aus einem vulkanisierbaren Gummimaterial der gleichen Zusammensetzung wie die die Gummimatrix des Tiefziehfußbettes bildende und mit Füllstoffen und Verstärkungseinlagen 2 versehene Gummimischung, aus dem der Körper des Tiefziehfußbettes gebildet ist. Vorzugsweise sind die stirnseitigen Ränder 9 des Streifens 8 zum Körper des Tiefziehfußbettes 1 hingebogen ( nicht gezeigt), wodurch Fehlstellen an der Übergangsstelle zwischen den Stirnseiten 9 und der übrigen Gummimatrix vermieden werden und so eine besonders feste und dauerhafte Übergangszone gebildet wird. Schließlich wird die untere Seite 3 des Tiefziehfußbettes 1 mit einer die Laufflächen des Schuhwerks bildenden Sohle (nicht gezeigt) versehen. Diese Sohle wird an das Tiefziehfußbett angeklebt, angenäht oder auch anvulkanisiert.

- 9 -

Schutzansprüche:

1.  Verfahren zur Herstellung eines eine für die
    Berührung mit der Fußsohle vorgesehene Auflage
    aus Leder aufweisenden Tiefziehfußbettes aus
    einer mit Füllstoffen und/oder Verstärkungseinlagen versehenen, vulkanisierbaren Gummimischung
    durch Ausvulkanisation der Gummimischung in einer
    Vulkanisationsform dadurch gekennzeichnet, daß
    man einen wenigstens von Füllstoffen und Einlagen
    freien Streifen der vulkanisierbaren Gummimischung auf mindestens einem Bereich der seitlichen Ränder der Vulkanisationsform zunächst
    getrennt von der übrigen Gummimischung in die
    From einbringt und unter inniger Berührung
    mindestens mit der übrigen Gummimischung gemeinsam
    ausvulkanisiert.

2.  Verfahren nach Anspruch 1, dadurch gekennzeichnet, daß man den Streifen auf dem den
    Zehenbereich des Tiefziehfußbettes begrenzenden
    Teil des Randes einbringt.

3.  Verfahren nach mindestens einem der vorhergehenden Ansprüche, dadurch gekennzeichnet, daß man
    die Stirnseiten des Streifens auf den inneren
    Bereich des Tiefziehfußbettes hinweisend in die
    übrige Gummimischung einvulkanisiert.

4.  Verfahren mindestens nach dem Gattungsbegriff des
    Anspruchs 1 dadurch gekennzeichnet, daß ein
    vorgetrockneter und nur noch geringe Restfeuchte
    sowie Füllstoffe und/oder Verstärkungseinlagen
    und Treibmittel enthaltender und geeignet zuge-

- 2 -

schnittener und vulkanisierbarer Sohlenrohling in eine Vulkanisationsform eingebracht und in einem verschleißfest zu gestaltenden Randbereich von einem Streifen einer vergleichbaren und ebenfalls vulkanisierbaren Gummimischung, die jedoch keine Füllstoffe und Verstärkungseinlagen enthält und mindestens treibmittelarm ist, umkleidet wird, worauf beide Teile mit der Lederauflage abgedeckt und unter inniger Berührung ausvulkanisiert werden.

5. Tiefziehfußbett welches nach mindestens einem Verfahren entsprechend einem der vorhergehenden Ansprüche 1 bis 4 hergestellt ist, dadurch gekennzeichnet, daß es einen im wesentlichen von Einlagen freien Streifen (8) der selben Gummimischung wie die übrigen Bereiche des Tiefziehfußbettes aufweist, der vorzugsweise entlang des vorderen, dem Bereich (7) der Zehen entsprechenden Teil des Randes (6) angeordnet ist.

Fig. 1

Fig. 2